# EUROPÄISCHE PATENTANMELDUNG

(11) **EP 1 049 267 A1**
(43) Veröffentlichungstag der Anmeldung: **02.11.2000**
(21) Anmeldenummer: 00109264.2
(22) Anmeldetag: 28.04.2000
(51) Int. Cl.: H04B 3/56

(54) **Signalübertragungsschaltung**

(30) Priorität: 30.04.1999 DE 19919901
(71) Anmelder: PolyTrax Information Technology AG, 81829 München (DE)
(72) Erfinder: Dalichau, Harald, Prof. Dr.-Ing. Dr.-Ing. habil., 81739 München-Waldperlach (DE)
(74) Vertreter: Strehl Schübel-Hopf & Partner

(57) **Zusammenfassung**

Die vorliegende Schaltung dient der Übertragung von Informationssignalen über das allgemeine Stromversorgungsnetz. Sie enthält einen Übertrager 13 zur galvanischen Trennung von der Netzspannung. Die netzseitige Wicklung L1 des Übertragers ist in Serie mit einem Kondensator C1 geschaltet, um die Netzfrequenz von der Frequenz des Informationssignals zu trennen. Sie ist lose mit einem Kopplungsgrad zwischen 0,8 und 0,98 mit den galvanisch vom Netz getrennten Wicklungen L2, L3 des Übertragers gekoppelt, wodurch der Übertrager eine gewünschte netzseitige Streuinduktivität erhält. Die Schaltung ist so bemessen, daß sie am Netz beim Senden eine niedrige und beim Empfangen eine hohe Impedanz aufweist, einen hohen Empfangssignalpegel zur Verfügung stellt und einen breitbandigen, ausgeglichenen Frequenzgang aufweist, der innerhalb eines breiten Frequenzbereichs von Schwankungen der Netzimpedanz weitgehend unabhängig ist.

## Beschreibung

Die Erfindung betrifft eine Übertragungsschaltung zum Übertragen elektrischer Signale über ein Übertragungsmedium wie das allgemeine Stromversorgungsnetz, das starken Impedanzschwankungen und Störungen unterworfen ist.

Zur Übertragung elektronischer Signale bei der Überwachung und Steuerung elektrischer und elektronischer Geräte und Maschinen, zur Bereitstellung von Telefon-, E-Mail und Internet-Anschlüssen und für andere Datennetze werden meist jeweils spezielle Leitungen verlegt. Wegen des damit verbundenen Aufwands wurden bereits verschiedene Versuche unternommen, die ohnehin vorhandenen Leitungen des allgemeinen Stromversorgungsnetzes zur Datenübertragung zu nutzen. Für den Niederspannungsteil (in Mitteleuropa: 230 V, 50 Hz) des Stromversorgungsnetzes sieht die europäische CENELEC-Norm EN50065 vier Frequenzbänder A bis D mit 9 bis 95, 95 bis 125, 125 bis 140 und 140 bis 148,5 kHz zur Informationsübertragung vor. In den USA oder in Japan sind Frequenzbereiche bis ca. 500 kHz verfügbar. In Zukunft wird die Verfügbarkeit von Frequenzen bis zu 30 MHz erwartet.

Ein konventionelles System zur Datenübertragung über das Stromversorgungsnetz ist in Application Note AN 655 der Firma SGS-Thomson, http://www.st.com angegeben. Dieses System enthält ein Modem zur Erzeugung und zum Empfang der zu übertragenden Signale mittels Frequenzmodulation bei Frequenzen von etwa 131 und 133 kHz. Die Kopplung des Modems mit dem Netz geschieht über eine Übertragungsschaltung, in der ein Transformator für eine galvanische Trennung vom Netz sorgt.

Der Transformator in solchen Systemen ist üblicherweise so mit Kondensatoren beschaltet, daß er ein schmalbandiges Filter für die verwendeten Frequenzen bildet. So sollen einerseits die Oberwellen des vom Modem erzeugten Signals und andererseits die 50 Hz- oder 60 Hz-Netzfrequenz und verschiedene Störungen vom Netz ausgefiltert werden.

Eine andere Übertragungsschaltung für die Datenübertragung über das Stromversorgungsnetz ist in WO 98/40980 angegeben. Sie enthält einen Lufttransformator, der so beschaltet ist, daß sich eine möglichst genaue Anpassung an eine bestimmte Netzimpedanz ergibt.

Eine Prinzipschaltbild zur Kommunikation über das Stromversorgungsnetz ist auch in DE-C-4003653 gezeigt.

Mit den bekannten Systemen ist jedoch lediglich eine begrenzte Übertragungsrate erreichbar. Der Grund liegt in den erheblichen Störspannungen und wechselnden Bedämpfungen des Stromversorgungsnetzes. So erzielt das System von SGS-Thomson nur eine Übertragungsrate von 1200 Bit pro Sekunde.

Der Erfindung liegt daher die Aufgabe zugrunde, eine Schaltung zu schaffen, die eine wenig störungsanfällige Signalübertragung über das Stromversorgungsnetz mit hoher Übertragungsgeschwindigkeit ermöglicht.

Die Lösung dieser Aufgabe gelingt mit der in Anspruch 1 angegebenen Übertragungsschaltung. Die Unteransprüche sind auf bevorzugte Ausführungsformen der Erfindung gerichtet.

Das Stormversorgungsnetz weist im betrachteten Frequenzbereich von je nach Land bis zu etwa 150 oder 500 kHz oder in Zukunft bis zu 30 MHz typische Ohm'sche Impedanzen von 1 Ω bis 100 Ω auf. Die induktiven Impedanzen können sehr hoch sein und zu Phasenwinkeln zwischen Strom und Spannung von 45°, in manchen Fällen bis nahezu 90° führen. Die Erfindung erreicht eine störunempfindliche Datenübertragung hoher Geschwindigkeit mit einer Übertragungsschaltung, die so an das Stromversorgungsnetz gekoppelt ist, daß der Signalpegel gegenüber den üblichen Schwankungen der Netzimpedanz weitgehend unempfindlich ist.

Vorzugsweise sollte bei jeder Frequenz im verwendeten Frequenzbereich die Änderung des Pegels des übertragenen Signals bei einer Änderung der Netzimpedanz im praktisch zu erwartenden Netzimpedanzbereich höchstens 3 dB, besser höchstens 2 oder 1,5 dB betragen.

Nach Anspruch 2 ist die Übertagungsschaltung, die der galvanischen Trennung vom Stromversorgungsnetz dient, breitbandig ausgelegt. Dies bedeutet hier eine 3 dB-Bandbreite von vorzugsweise mindestens ±10%. Die Breitbandigkeit bewirkt einen flachen Verlauf des übertragenen Signalpegels bei Änderung der Signalfrequenz, also eine geringe Abhängigkeit des Signalpegels von der Signalfrequenz. Sie ermöglicht die gleichzeitige Nutzung vieler Frequenzen innerhalb eines breiten Frequenzbereichs, beispielsweise innerhalb eines oder mehrerer der Frequenzbänder A bis D der CENELEC-Norm. Dabei können die Signale durch Zweiseitenbandmodulation mit einer oder mehreren Trägerfrequenzen übertragen werden. So lassen sich erheblich mehr Informationen gleichzeitig übermitteln als mit einer schmalbandigen Übertragungsschaltung. Damit sind Datenübertragungsraten erzielbar, die mit ISDN vergleichbar sind.

Die Gefahr, aufgrund der großen Bandbreite auch mehr Störsignale zu empfangen und somit Übertragungsfehler zu verursachen, erweist sich als unwesentlich. Denn viele Störsignale auf dem Stromversorgungsnetz sind nur sehr kurz oder auf enge Frequenzbereiche beschränkt. Sie lassen sich daher vom Empfänger leicht korrigieren, wenn die von der Erfindung ermöglichte hohe Übertragungsrate auch zur Übermittlung von Fehlerkorrekturcodes genutzt wird, wo dies notwendig ist.

Die Breitbandigkeit der Übertragungsschaltung ermöglicht es auch, bei der Herstellung auf einen Abgleich auf den gewünschten Frequenzbereich zu verzichten.

Die Breitbandigkeit sollte bei allen praktisch auftretenden Netzimpedanzen erhalten bleiben. Für die einzelnen Netzimpedanzen sollte die jeweilige Übertragungsfunktion über die verwendeten Frequenzen nur um höchstens 3 dB, besser höchstens 2 oder 1,5 dB abfallen.

Die Ausgestaltung nach Anspruch 3 ist zur galvanischen Trennung vom Stromversorgungsnetz besonders zweckmäßig. Als Alternative zum induktiven Übertrager (Transformator) ist jedoch auch eine Netzanschlußschaltung mit überwiegend kapazitiver Kopplung denkbar.

Die Ausgestaltung nach Anspruch 4 mit einer losen Kopplung zwischen der ersten und der zweiten Wicklung weist den Vorteil auf, daß sich auch bei Wicklungen mit wenig Windungen und damit geringem Ohm'schen Widerstand eine gewisse Streuinduktivität ergibt. Die Streuinduktivität ist näherungsweise die bei Kurzschluß der zweiten Wicklung an der ersten Wicklung gemessene Induktivität des Übertragers. Wie später im einzelnen erläutert wird, wirkt sich die Streuinduktivität günstig auf den Frequenzgang aus. Im vorliegenden Zusammenhang liegt eine lose Kopplung bei Kopplungsraten von 0,98 und weniger vor. Kopplungsraten von weniger als 0,8 können allerdings zu einer starken Dämpfung des übertragenen Signals führen. Bevorzugte Kopplungsraten liegen daher zwischen 0,8 und 0,98 oder vorzugsweise zwischen 0,88 und 0,96. Lose Kopplungen im genannten Bereich lassen sich einfach durch einen Übertrager erreichen, der einen Kern mit Spalt aufweist, wie in Anspruch 5 angegeben. Der Spalt macht die magnetischen Eigenschaften des Kerns auch weitgehend unabhängig von Temperaturschwankungen und Exemplarstreuungen. Die gewünschte Streuinduktivität auf der Seite einer Wicklung läßt sich bei festerer Kopplung auch durch eine entsprechend dimensionierte zusätzliche Induktivität in Reihe mit der jeweiligen Wicklung erreichen.

Die in Anspruch 6 angegebene erste Kapazität bildet zusammen mit der Induktivität der ersten Wicklung einen Hochpaß zur Trennung der niedrigen 50 Hz oder 60 Hz Netzfrequenz von den Frequenzen der empfangenen Signale.

Die Merkmale der Ansprüche 6 bis 8 tragen ferner dazu bei, eine starke Dämpfung des gesendeten Signals bei sehr geringen Netzimpedanzen zu vermeiden. Denn bei einer niedrigen Netzimpedanz von etwa 1 Ω kann die in Anspruch 6 angegebene Kapazität einen Resonanzkreis mit der Streuinduktivität bilden, der für einen ausreichenden Signalpegel auf dem Netz sorgt, aber breitbandig genug bleibt, um den Frequenzgang nicht negativ zu beeinflussen. Da die Kosten passiver Bauelemente etwa proportional zu ihren Volumina sind, ergibt sich die kostengünstigste Ausführungsform dann, wenn der Übertrager und die Kapazität, wie in Anspruch 7 angegeben, etwa das gleiche Bauvolumen aufweisen, während die Streuinduktivität und die Kapazität die Resonanzbedingung erfüllen. Das Merkmal des Anspruchs 8, wonach die erste Wicklung des Übertragers einen geringen Ohm'schen Innenwiderstand aufweist, bewirkt ebenfalls hohe Signalpegel bei geringen Netzimpedanzen.

Die Ausgestaltung nach Anspruch 9 erzielt eine Verstärkung der Signalpegel empfangener Signale. Anspruch 10 betrifft die Verwendung der Übertragungsschaltung in einem System zur Übertragung digitaler Daten.

Bevorzugte Ausführungsbeispiele der Erfindung werden zusammen mit Vergleichsbeispielen anhand der Zeichnungen erläutert. Darin zeigt
Figur 1 das Blockschaltbild eines Systems zur Übertragung digitaler Daten über das allgemeine Stromversorgungsnetz unter Verwendung einer Übertragungsschaltung der Erfindung,
Figur 2 das Schaltbild der Übertragungsschaltung, und
Figur 3 bis Figur 6 den Frequenzgang verschiedener Übertragungsschaltungen nach der Erfindung und nach Vergleichsbeispielen.

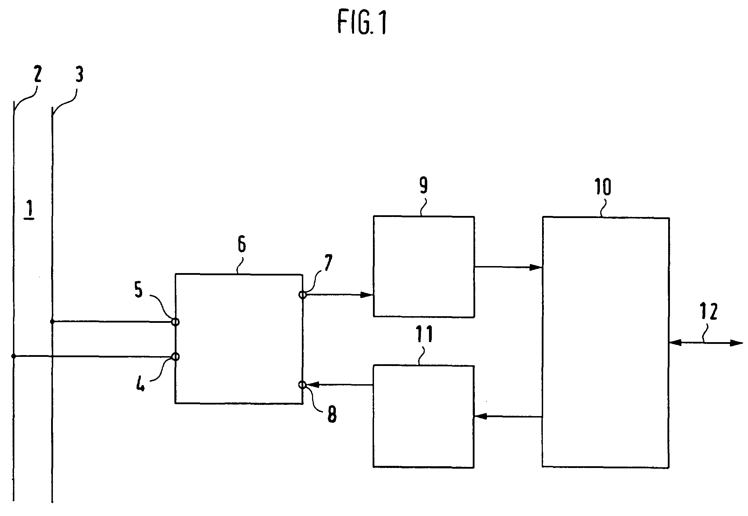

Das in Figur 1 dargestellte System ist in der Lage, digitale Daten über das allgemeine Stromversorgungsnetz 1 auszusenden und zu empfangen. Bei dem Stromversorgungsnetz 1 handelt es sich um ein 230 V, 50 Hz Niederspannungsnetz. An den Nulleiter 2 und eine Phasenleitung 3 des Netzes 1 ist jeweils ein netzseitiger Anschluß 4, 5 einer Übertragungsschaltung 6 angeschlossen, die die übrigen Teile des Systems galvanisch vom Netz 1 trennt, Signale, die mit den digitalen Daten moduliert sind, jedoch vom Netz 1 zu einem ersten anwendungsseitigen Anschluß 7 und in umgekehrter Richtung von einem zweiten anwendungsseitigen Anschluß 8 zum Netz hin überträgt. Der erste anwendungsseitige Anschluß 7 ist über eine Empfängerschaltung 9, die einen Empfangsverstärker enthält, mit einem Modem 10 verbunden. Das Modem 10 ist außerdem über einen Sendeverstärker 11 mit dem zweiten anwendungsseitigen Anschluß 8 der Übertragungsschaltung 6 gekoppelt. Zur Einund Ausgabe der digitalen Daten weist das Modem 10 eine Datenleitung 12 auf.

Die Übertragungsschaltung 6, die Empfängerschaltung 9, der Sendeverstärker 11 und das Modem 10 sind außerdem mit einem nicht dargestellten Bezugspotential (Masse) verbunden.

Das Modem 10 empfängt zu übertragende Daten von der Datenleitung 12 und erzeugt ein entsprechend moduliertes Signal im Frequenzbereich der CENELEC-Norm, also beispielsweise im Frequenzbereich von 110 kHz ±15 kHz oder 122 kHz ±28 kHz. Das modulierte Signal wird über den Sendeverstärker 11 der Übertragungsschaltung 6 zugeführt, die es den Spannungen auf dem Netz 1 überlagert. Das Modem 10 wendet eine Zweiseitenbandmodulation mit einer oder mehreren Trägerfrequenzen an, die die angegebenen Frequenzbereiche möglichst vollständig zur Übermittlung der Daten nutzt.

Signale in den angegebenen Frequenzbereichen, die von einem gleichartigen System ebenfalls über das Netz 1 ausgesandt werden, werden in der Übertragungsschaltung 6 von der 50 Hz-Netzfrequenz getrennt und über die Empfängerschaltung 9 an das Modem 10 weitergeleitet, das durch Demodulation die darin enthaltenen Daten gewinnt und auf der Datenleitung 12 ausgibt.

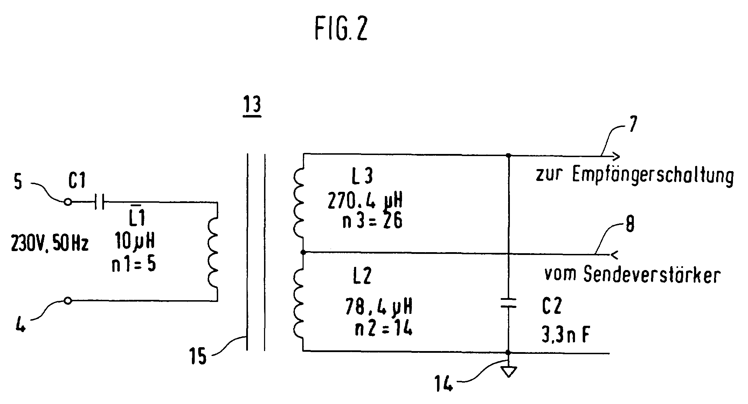

Figur 2 zeigt das Schaltbild der Übertagungsschaltung 6. Sie enthält einen induktiven Übertrager 13 (Transformator) zur galvanischen Trennung der netzseitigen Anschlüsse 4, 5 einerseits von den anwendungsseitigen Anschlüssen 7, 8 andererseits. Der Übertrager 13 dient außerdem sowohl der Übermittlung zum Netz gesendeter als auch vom Netz empfangener Signale vom Sendeverstärker und zur Empfängerschaltung.

Der Übertrager 13 enthält eine erste Wicklung L1, die in Reihe mit einem ersten Kondensator C1 zwischen den netzseitigen Anschlüssen 4, 5 liegt. Galvanisch von der ersten Wicklung L1 getrennt beinhaltet er außerdem zwischen einem Masse-Anschluß 14 und dem ersten anwendungsseitigen Anschluß 7, der mit der Empfängerschaltung 9 verbunden ist, eine Serienschaltung aus einer zweiten Wicklung L2 und einer dritten Wicklung L3. Der Verbindungspunkt zwischen der zweiten und der dritten Wicklung ist mit dem zweiten anwendungsseitigen Anschluß 8 verbunden, der zum Sendeverstärker 11 führt. Parallel zur Serienschaltung aus zweiter und dritter Wicklung L2, L3 befindet sich ein zweiter Kondensator C2.

Der erste Kondensator C1 und die erste Wicklung L1 bilden einen Hochpaß zur Trennung der 110 ±15 kHz oder 122 ±28 kHz Signalfrequenzen von der 50 Hz Netzfrequenz. Der zweite Kondensator C2 bildet mit der Serienschaltung aus zweiter und dritter Wicklung L2, L3 einen breitbandigen Resonanzkreis für die Signalfrequenzen.

Die Bemaßung der Schaltung der Figur 2 erfolgt nach folgenden Gesichtspunkten für das Aussenden der Signale an das Netz 1:

Übliche Sendeverstärker weisen Ausgangsimpedanzen von einigen Ohm auf, während die Netzimpedanz oft niedriger ist und auf 1 Ω oder weniger sinken kann. Zur Impedanzanpassung zwischen Netz 1 und Sendeverstärker 11 sollte die erste Wicklung L1 daher weniger Windungen als die zweite Wicklung L2 aufweisen: n1 < n2. Beim vorliegenden Ausführungsbeispiel wird eine Impedanztransformation von etwa 1 : 6 erreicht.

Normen wie die CENELEC-Norm schreiben Maximalleistungen und Maximalspannungen für die Signalübertragung auf dem Netz 1 vor. Um auch bei niedrigen Netzimpedanzen die maximal zulässige Spannung des ausgesendeten Signals zu erreichen, sollte der Innenwiderstand der Wicklungen des Übertragers 13 und insbesondere der Innenwiderstand der ersten Wicklung L1 sehr viel kleiner als 1 Ω, vorzugsweise kleiner als 0,1 Ω sein. Daher werden für die erste Wicklung L1 nur n1 = 5 Windungen Kupferdraht mit einem Ohm'schen Widerstand von etwa 0,03 Ω gewählt.

Außerdem sind die Wicklungen L1 und L2 nur vergleichsweise lose, bei einer Kopplungsrate von weniger als 0,98 miteinander gekoppelt. Dadurch erhält der Übertrager 13 eine gewisse an der Wicklung L1 meßbare Streuinduktivität, die zusammen mit dem Kondensator C1 für einen ausgeglichenen Frequenzgang, d.h. eine geringe Abhängigkeit der Signaldämpfung von der Signalfrequenz und von der Netzimpedanz sorgt.

Der Wert der Streuinduktivität Lₛₜᵣ und des Kondensators C1 werden so gewählt, daß sich innerhalb des zur Signalübertragung genutzten Frequenzbands im Zusammenhang mit der Impedanz des Netzes möglichst geringe Abhängigkeiten der Übertragungsfunktion von der Netzimpedanz ergeben. Bei großen Netzimpedanzen (etwa 100 Ω) ist der Serienschwingkreis aus C1 und Lₛₜᵣ stark gedämpft und die Resonanz beeinflußt das Übertragungsverhalten kaum. Bei niedrigen Netzimpedanzen (etwa 1 Ω) verhindert die Resonanz jedoch ein Absinken der Spannung des zum Netz 1 ausgesandten Signals. Aufgrund der dabei noch vorhandenen Ohm'schen Widerstände bleibt das Resonanzverhalten des Serienschwingkreises stets breitbandig.

Ein weiteres Kriterium bei der Auswahl der Werte von C1 und L1 ergibt sich daraus, daß die Kosten dieser Bauelemente etwa proportional zu ihrem Volumen sind und dieses bei gegebenen Anforderungen an die Fähigkeiten zur Isolierung gegenüber der Netzspannung wiederum proportional zur Kapazität C1 bzw. den Induktivitäten des Übertragers 13 ist. Bei Festhalten der vom Produkt aus C1 und Lₛₜᵣ bestimmten Resonanzfrequenz lassen sich daher die Gesamtkosten für den Kondensator C1 und den Übertrager 13 minimieren, wenn beide etwa das gleiche Bauvolumen aufweisen.

Diese Vorgaben werden bei handelsüblichen Bauteilen mit den in Figur 2 angegebenen Induktivitäten und Windungszahlen, einem Kopplungsgrad von k = 0,935 zwischen der ersten und der zweiten Wicklung L1, L2, einer daraus resultierenden Streuinduktivität von 1,6 µH und einer Kapazität des Kondensators C1 von 2 µF erfüllt.

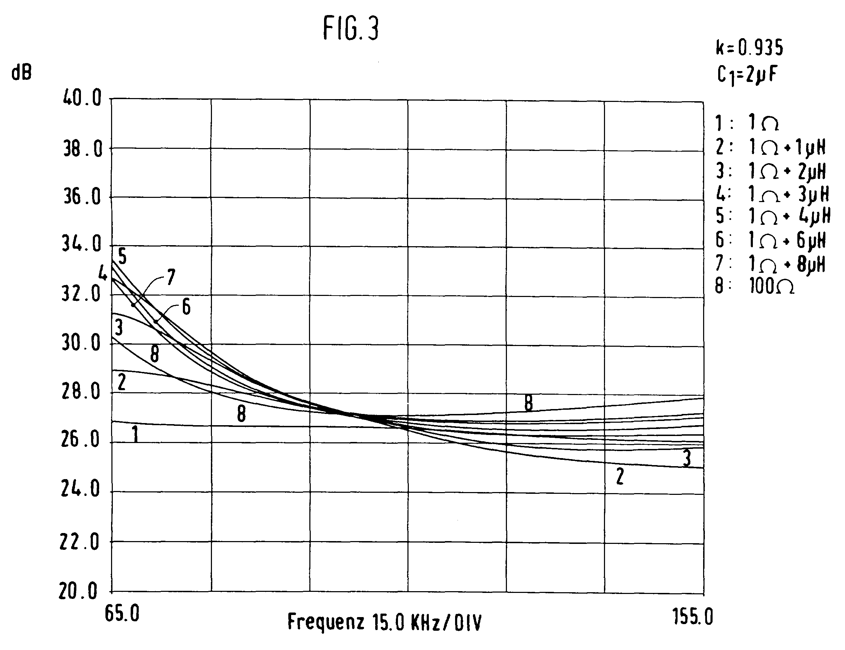

Figur 3 zeigt den Frequenzgang der Übertragungsschaltung nach Figur 2 im Sendebetrieb. Auf der Abszisse ist die Frequenz eines von einem sehr niederohmigen Sendeverstärker am anwendungsseitigen Anschluß 8 anliegenden Signals von 65 bis 155 kHz mit 15 kHz pro Teilung aufgetragen. Auf der Ordinate ist der Pegel (die Amplitude) des an den netzseitigen Anschlüssen 4, 5 gemessenen, vom Übertrager 13 übermittelten Signals in dB bezogen auf eine willkürliche Bezugsspannung aufgetragen. Die Kurvenschar gibt den Frequenzgang für unterschiedliche Netzimpedanzen wieder, die mit den Indizes 1 bis 8 versehen sind; nämlich für eine rein Ohm'sche Impedanz von 1 Ω, eine rein Ohm'sche Impedanz von 100 Ω und für Impedanzen mit einem Ohm'schen Widerstand von 1 Ω und Induktivitäten von 1 µH bis 8 µH.

Vorzugsweise sollte bei jeder Frequenz im Bereich von ± 15 kHz, also etwa ±14 % um die mittlere Signalfrequenz von hier 110 kHz die Änderung des Pegels des übertragenen Signals bei einer Änderung der Netzimpedanz im praktisch zu erwartenden Netzimpedanzbereich höchstens 1,5 dB betragen. Und für die einzelnen Netzimpedanzen sollte die jeweilige Übertragungsfunktion über die verwendeten Frequenzen (also über insgesamt 30 kHz bzw. 28 % der mittleren Frequenz) nur um 1,5 dB oder weniger abfallen. Die 3 dB-Bandbreite der Übertragungsschaltung sollte mindestens ±10 % der Mittenfrequenz geringster Dämpfung betragen, wobei diese Mittenfrequenz im Sinne einer möglichst geringen Netzimpedanz-Abhängigkeit der ausgesandten Signalpegel außerhalb des verwendeten Frequenzbereichs liegt.

Figur 3 zeigt, daß diese Werte von dem vorliegenden Ausführungsbeispiel hervorragend eingehalten werden. Auch bei noch höheren Netzinduktivitäten als 8 µH ist keine Verschlechterung des Frequenzgangs zu erwarten, da die Kurven zeigen, daß eine zunehmende Netzinduktivität nicht zur weiteren Auffächerung der Kurvenschar führt; die Einhüllende der Kurvenschar wird vielmehr von den rein Ohm'schen Netzimpedanzen (Kurven 1 und 8) und Netzinduktivitäten bis etwa 3 µH (Kurven 2 bis 4) bestimmt.

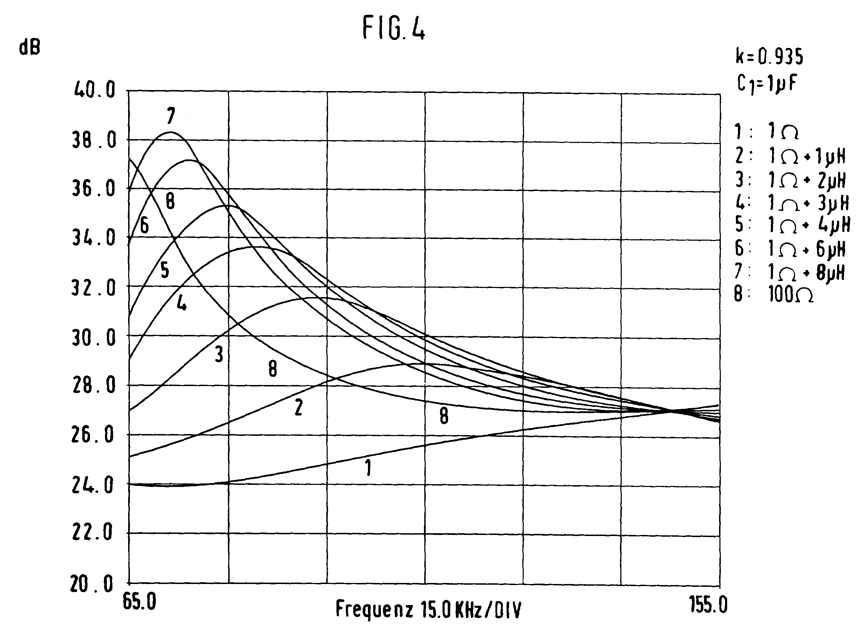

Figur 4 zeigt entsprechend zu Figur 3 die Übertragungsfunktionen einer Abwandlung der Übertragungsschaltung, bei der der Wert des Kondensators C1 von 2 µF auf 1 µF verringert wurde. Hier beträgt im bereits angegebenen Frequenzbereich die Änderung des Signalpegels bei Änderung der Netzimpedanz maximal etwa 7,5 dB und der maximale Abfall einer Übertragungsfunktion etwa 4 dB.

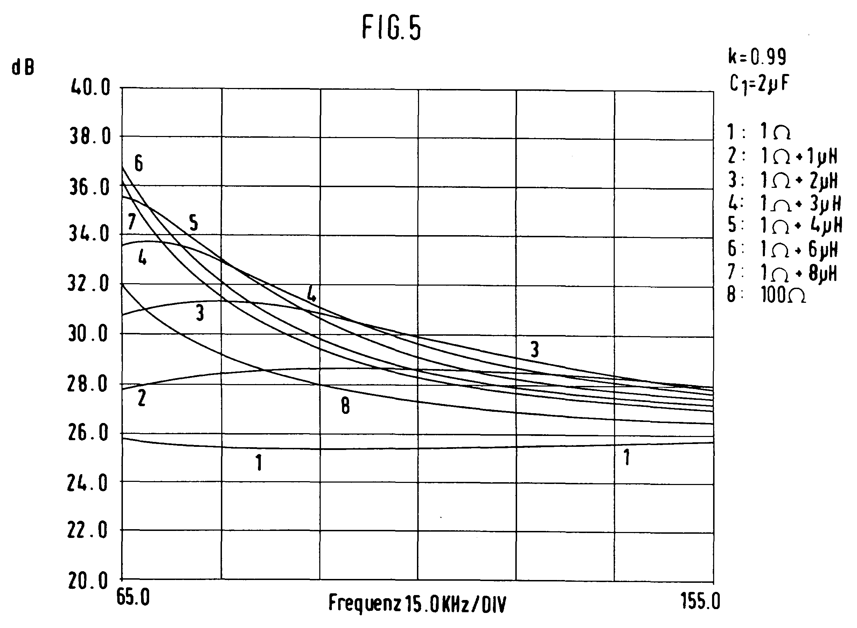

Figur 5 zeigt den Frequenzgang einer weiteren Anwandlung, bei der der Wert des Kondensators C1 bei 2 µF gehalten, der Kopplungsgrad k zwischen erster und zweiter Wicklung L1, L2 aber auf 0,99 erhöht wurde. Damit ergibt sich im betrachteten Frequenzbereich eine maximale Pegeländerung von 5,5 dB und ein maximaler Abfall einer Übertragungsfunktion von etwa 2,4 dB. Die Werte der Figuren 4 und 5 sind für gewisse Anwendungen noch akzeptabel, da die verwendete Zweiseitenbandmodulation für Dämpfungsänderungen, die von Impedanzschwankungen des Netzes herrühren und das gesamte Frequenzband gleichmäßig erfassen, weniger empfindlich ist als für Unterschiede der Dämpfung zwischen beiden Seiten des Frequenzbands bei konstanter Netzimpedanz.

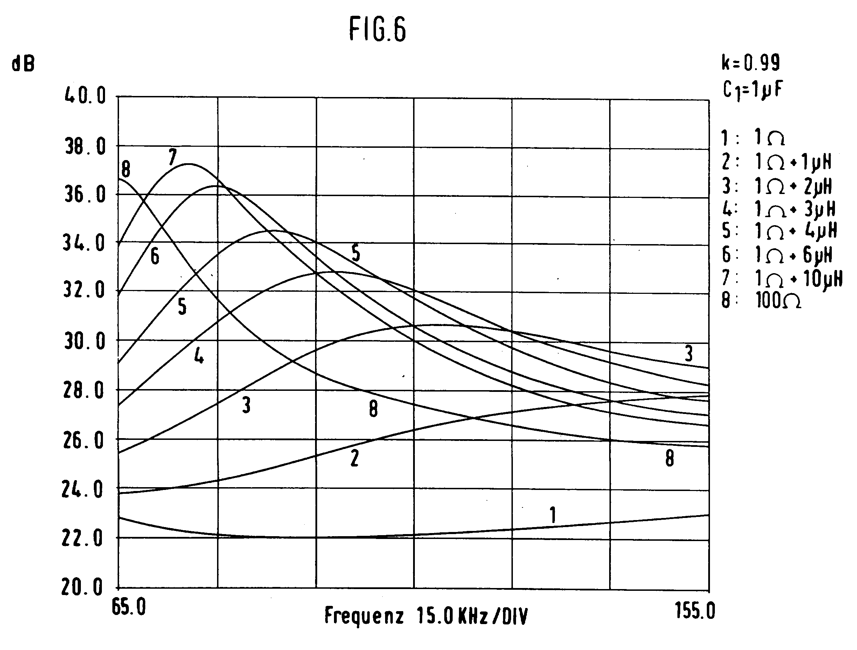

Figur 6 zeigt den Frequenzgang einer Abwandlung der Übertragungsschaltung mit einer Kapazität C1 von 1 µF und einem Kopplungsgrad k von 0,99. Im betrachteten Frequenzbereich beträgt die maximale Pegeländerung des übertragenen Signals bei den angegebenen möglichen Änderungen der Netzimpedanz nahezu 12 dB und der maximale Abfall einer Übertragungsfunktion beträgt nahezu 4 dB. Die so modifizierte Schaltung ist daher zum Aussenden von Signalen mit hoher Übertragungsgeschwindigkeit und geringer Fehlerrate im betrachteten Frequenzbereich kaum mehr geeignet.

Für die Bemessung der Übertragungsschaltung der Figur 2 gelten im Hinblick auf eine möglichst hohe Empfindlichkeit beim Empfang von Signalen vom Netz 1 die folgenden Gesichtspunkte:

Eine relativ große Windungszahl n3 der dritten Wicklung L3 (größer als n1 oder n2) bewirkt eine Spannungstransformation von der ersten Wicklung L1 zur Reihenschaltung aus zweiter und dritter Wicklung L2 und L3 und damit eine hohe Signalspannung am anwendungsseitigen Anschluß 7.

Der Wert des Kondensators C2 (hier 3,3 nF) ist so bemessen, daß sich zusammen mit der ihm parallelgeschalteten Induktivität des Übertragers 13 ein Schwingkreis mit einer Resonanzfrequenz im Bereich der Signalfrequenzen ergibt. So hat die Übertragungsschaltung im Empfangsbetrieb eine relativ hohe Impedanz an den netzseitigen Anschlüssen 4 und 5. Vorzugsweise wird der Sendeverstärker im Empfangsbetrieb außerdem hochohmig geschaltet.

Wenn die Empfängerschaltung am Anschluß 7 sehr hochohmig ist, kann dem Kondensator C2 ein weitere Widerstand parallelgeschaltet werden, um die Resonanz des Schwingkreises aus Kondensator C2 und Übertrager 13 breitbandig zu machen. Die 1 dB-Bandbreite sollte vorzugsweise mindestens gleich dem zur Signalübertragung genutzten Frequenzband sein.

Der Übertrager 13 weist zweckmäßigerweise einen E-förmigen Kern mit Joch und Luftspalt auf. Der Luftspalt macht die Eigenschaften des Übertragers 13 weitgehend unabhängig von Exemplarstreuungen und Temperaturschwankungen der Permeabilität des Kernmaterials (bspw. Ferrit). Außerdem bewirkt er den gewünschten Kopplungsgrad.

Der Spalt sollte jedoch nicht so groß sein, daß Streufelder ausgesandt oder Störfelder empfangen werden oder der Kopplungsgrad unter etwa 0,88 oder gar unter 0,8 sinkt. Denn bei einer solch losen Kopplung dämpft der Übertrager die Signale zu stark.

Die vorliegende Übertragungsschaltung 6 ist also so bemessen, daß sie am Netz 1 beim Senden eine niedrige und beim Empfangen eine hohe Impedanz aufweist, einen hohen Empfangssignalpegel am anwendungsseitigen Anschluß 7 zur Verfügung stellt und einen breitbandigen, ausgeglichenen Frequenzgang aufweist, der innerhalb eines breiten Frequenzbereichs von Schwankungen der Netzimpedanz weitgehend unabhängig ist.

## Patentansprüche

1. Übertragungsschaltung zum Übertragen von Signalen einer Anwendungsschaltung (9 bis 12) innerhalb eines vorbestimmten Frequenzbereichs über das Stromversorgungsnetz (1), aufweisend:
einen anwendungsseitigen Anschluß (7,8) zur Verbindung mit einer Anwendungsschaltung (9 bis 12),
einen netzseitigen Anschluß (4, 5) zur Verbindung mit dem Stromversorgungsnetz (1), und
einen Übertrager (13) zur Übertragung der genannten Signale zwischen dem netzseitigen und dem anwendungsseitigen Anschluß unter galvanischer Trennung dieser Anschlüsse (4, 5; 7, 8) voneinander,
dadurch gekennzeichnet, daß die Übertragungsschaltung so ausgelegt ist, daß der Pegel der auf das Stromversorgungsnetz ausgesandten Signale im genannten Frequenzbereich im wesentlichen unabhängig von Schwankungen der Netzimpedanz ist.

2. Schaltung nach Anspruch 1, wobei die Übertragungsschaltung breitbandig ausgelegt ist, so daß sich für die vom Übertrager übermittelten Signale innerhalb des genannten Frequenzbereichs ein ausgeglichener Frequenzgang ergibt.

3. Schaltung nach Anspruch 1 oder 2, wobei der Übertrager (13) ein induktiver Übertrager mit einer mit dem netzseitigen Anschluß (4, 5) verbundenen ersten Wicklung (L1) und einer mit dem anwendungsseitigen Anschluß (7, 8) verbundenen zweiten Wicklung (L2) ist.

4. Schaltung nach Anspruch 3, wobei die erste und die zweite Wicklung (L1; L2) lose, bei einer Kopplungsrate zwischen 0,8 und 0,98, vorzugsweise zwischen 0,88 und 0,96 miteinander gekoppelt sind.

5. Schaltung nach Anspruch 3 oder 4, wobei der Übertrager (13) einen Kern (15) mit Spalt aufweist.

6. Schaltung nach einem der Ansprüche 3 bis 5, wobei zwischen dem Übertrager (13) und dem netzseitigen Anschluß (4, 5) in Serie mit der ersten Wicklung (L1) eine erste Kapazität (C1) geschaltet und die an der ersten Wicklung (L1) gemessene Streuinduktivität des Übertragers (13) sowie die erste Kapazität (C1) so dimensioniert sind, daß sich für alle in Frage kommenden Netzimpedanzen ein praktisch konstantes Übertragungsverhalten ergibt.

7. Schaltung nach Anspruch 6, wobei das Bauvolumen der ersten Kapazität (C1) etwa gleich dem Bauvolumen des Übertragers (13) ist.

8. Schaltung nach einem der Ansprüche 3 bis 7, wobei der Innenwiderstand der ersten Wicklung (L1) kleiner als 1 Ω, vorzugsweise kleiner als 0,1 Ω ist.

9. Schaltung nach einem der Ansprüche 3 bis 8, wobei die zweite Wicklung (L2) mit einem ersten anwendungsseitigen Anschluß (8) für einen Sendeverstärker (11) der Anwendungsschaltung verbunden ist und in Reihe zur zweiten Wicklung eine dritte Wicklung (L3) geschaltet ist, die mit einem zweiten anwendungsseitigen Anschluß (7) für eine Empfängerschaltung (9) der Anwendungsschaltung verbunden ist und wobei die Serienschaltung aus zweiter und dritter Wicklung zusammen mit einer parallel zu ihr geschalteten zweiten Kapazität (C2) einen Schwingkreis bildet, der so bedämpft ist, daß sein Resonanzverhalten breitbandig ist.

10. System zur Übertragung digitaler Daten über das Stromversorgungsnetz mit einer Übertragungsschaltung (6) nach einem der Ansprüche 1 bis 9, einem Sende-/Empfangsverstärker (9, 11) und einem Modem (10).
